# EUROPÄISCHE PATENTANMELDUNG

(11) **EP 1 233 135 A1**
(43) Veröffentlichungstag der Anmeldung: **21.08.2002**
(21) Anmeldenummer: 01127900.7
(22) Anmeldetag: 23.11.2001
(51) Int. Cl.: E06B 3/58

(54) **Verfahren zur Herstellung eines Formteils mit Rahmen**

(30) Priorität: 30.01.2001 EP 01102002
(71) Anmelder: An der Heiden, Dominik, 46485 Wesel (DE)
(72) Erfinder: An der Heiden, Dominik, 46485 Wesel (DE)
(74) Vertreter: Stenger, Watzke & Ring Patentanwälte

(57) **Zusammenfassung**

Die Erfindung betrifft ein Verfahren zur Herstellung eines Formteils (10) mit einem Rahmen, wobei der Rahmen auf beiden Seiten des Formteils (10) um einen Öffnungsbereich (13) herum ausgebildet wird. Im Stand der Technik werden die den Rahmen bildenden Elemente (15) nachträglich aufgesetzt, was sehr arbeits- und kostenintensiv ist. Erfindungsgemäß werden zumindest Teilbereiche (16) des Rahmens bei der Herstellung des Formteils (10) einstückig an das Formteil (10) angeformt und die übrigen Rahmenbereiche werden nachträglich ergänzt. Dadurch werden in vorteilhafter Weise Arbeitsschritte eingespart, da die bei der Rahmenproduktion anfallenden Arbeitsschritte wie Zuschnitt, Lackieren, Grundieren und Aufkleben überwiegend entfallen.

## Beschreibung

Die Erfindung betrifft ein Verfahren zur Herstellung eines Formteils mit einem Rahmen, wobei der Rahmen auf beiden Seiten des Formteils um einen Öffnungsbereich herum ausgebildet wird.

Im Stand der Technik sind eine Vielzahl von Formteilen bekannt, die einen Rahmen aufweisen. So werden Rahmen beispielsweise bei Türen um einen Öffnungsbereich herum angeordnet, durch welchen hindurchgesehen werden kann. In diese Öffnungsbereiche werden zumeist optisch transparente Scheiben eingesetzt. Um die Öffnungsbereiche herum werden beidseitig des Formteils im wesentlichen als Zierde dienende Rahmen angeordnet, die beispielsweise auch Dichtungen oder Klebekanten verbergen und das Formteil dadurch optisch aufwerten.

Im Stand der Technik werden diese Rahmen nachträglich aufgesetzt, also nachdem das Formteil gefertigt wurde, der Öffnungsbereich herausgeschnitten und eine Scheibe eingesetzt wurde. Die Rahmenelemente müssen bevor sie beispielsweise aufgeklebt werden, genaustens an den Öffnungsbereich angepaßt werden. So müssen die Rahmen produziert werden, indem sie zugeschnitten und gefräst werden, und im Anschluß daran müssen sie zumindest lackiert werden, damit sie farblich an das Formteil angepaßt sind. Bei einem rechteckigen, die Öffnung vollumschließenden Rahmen müssen daher 8 Rahmenelemente auf Gärung zugeschnitten, aufgeklebt, angepaßt und lackiert werden. Diese Schritte der eigentlichen Rahmenproduktion und der Anordnung der Rahmen auf dem Formteil sind äußerst zeit- und somit kostenintensiv.

Der Erfindung lag daher die **Aufgabe** zu Grunde, ein schnelles und kostengünstiges Verfahren zur Herstellung des eingangs genannten Formteils bereitzustellen.

**Gelöst** wird diese Aufgabe durch ein eingangs genanntes Verfahren, welches dadurch gekennzeichnet ist, daß zumindest Teilbereiche des Rahmens bei der Herstellung des Formteils einstückig an das Formteil angeformt werden und die übrigen Rahmenbereiche nachträglich ergänzt werden.

Der Begriff Rahmen bezieht sich vorliegend auch auf die Rahmenanordnung beidseitig des Formteils, somit werden also auch die Einzelrahmen auf jeder Seite des Formteils unter diesem Begriff zusammengefaßt. Bei dem erfindungsgemäßen Verfahren werden Teilbereiche des Rahmens direkt bei der Herstellung des Formteils einstückig an das Formteil angeformt. Dies hat den Vorteil, daß zumindest Teilbereiche des Rahmens direkt bei der Herstellung des Formteils an der richtigen Position mit ausgebildet werden. Diese direkt angeformten Bereiche müssen dann in vorteilhafter Weise nicht nachträglich ergänzt werden. Die direkt angeformten Teilbereiche werden vorzugsweise so angeformt, daß gerade noch eine Scheibe eingesetzt werden kann. Der Rahmen wird dann im Anschluß durch die Anordnung der übrigen Rahmenbereiche vervollständigt.

Das erfindungsgemäße Verfahren bietet den Vorteil, daß die direkt angeformten Teilbereiche des Rahmens nicht extra hergestellt und nachträglich aufgesetzt werden müssen. Sie werden durch die einstückige Ausbildung direkt bei der Formteilherstellung an der richtigen Position angeordnet. Dadurch ist das erfindungsgemäße Verfahren nicht nur extrem anpaßbar, sondern auch die Arbeitsschritte werden verringert, da zumindest für die direkt angeformten Bereiche der Zuschnitt und das Lackieren und das Versiegeln entfällt. Dadurch ist das Verfahren auch wirtschaftlicher, da auch weniger Klebstoffe u.ä. verwendet werden. Auch reduziert sich durch die einstückige Herstellung der Abfall, da keine Zuschnittreste u.ä. auftreten. Auch ist das Gesamtbild ansprechender, da zumindest ein Teil der beispielsweise Gärungskanten durch die einstückige Herstellung entfallen kann.

Gemäß einer vorteilhaften Weiterbildung werden die einstückig am Formteil angeformten Rahmenbereiche einseitig des Formteils ausgebildet. Diese Ausführungsform bietet den Vorteil, daß der Rahmenbereich auf einer Seite bereits vollständig ausgebildet ist und auf dieser Seite keine weiteren Rahmenelemente nachträglich ergänzt werden müssen. Dadurch können eventuelle Gärungen o.ä. vollständig entfallen und die äußere Gestaltung ist aufgrund ihrer einstückigen Ausbildung äußerst ansprechend. Eine einzusetzende Scheibe kann dann von der anderen Seite her in dem Öffnungsbereich plaziert werden und danach kann der Rahmen durch Aufsatz der übrigen Rahmenelemente vervollständigt werden. Dadurch reduzieren sich die Bearbeitungsschritte erheblich.

Von besonderem Vorteil ist es, wenn die einstückig am Formteil angeformten Rahmenbereiche über den Öffnungsbereich hinausragen. Diese Ausgestaltung bietet Vorteile bei der Montage, da die überstehenden Bereiche einen Sperrfläche für die Scheibe bilden, die dadurch nicht aus dem Öffnungsbereich hinausfallen kann. Die überstehenden Bereiche ermöglichen daher die bessere und sichere Positionierung der Scheibe, da sie eine Stützfläche für diese zur Verfügung stellen. Dies ist auch ein erheblicher Vorteil gegenüber den im Stand der Technik bekannten Verfahren, da dadurch auch Verklebungen und Sicherungsmaßnahmen bei der Positionierung der Scheibe entfallen. Die Montage wird erheblich vereinfacht. Nachdem die übrigen Rahmenbereiche entsprechend ergänzt wurden, wird ein Herausfallen der Scheibe durch die überstehenden Rahmenbereiche in jede Richtung effektiv verhindert.

Gemäß einer Ausführungsform sind die angeformten Teilbereiche des Rahmens trapezförmig gestaltet. Korrespondierend dazu werden selbstverständlich auch die übrigen Rahmenelemente gestaltet. Neben der Trapezform sind auch andere Rahmengestaltungen wie halbrunde oder eckige Formen möglich.

Gemäß einer vorteilhaften Ausführungsform werden die zu ergänzenden Rahmenbereiche als Einzelelemente auf das Formteil aufgesetzt. Dies ist insbesondere von Vorteil, wenn die Rahmenanordnung auf einer Seite des Formteils bereits direkt bei der Herstellung des Formteils angeformt wird. Nach dem Einsatz der Scheibe kann dann die Rahmenanordnung auf der anderen Seite ergänzt werden. Diese kann aus mehreren Einzelelementen bestehen oder vorzugsweise aus einem Rahmenelement, welches auch ein Formteil sein kann. Dadurch muß in vorteilhafter Weise nur ein einziges Teil angeklebt bzw. aufgesetzt werden, was die Herstellung erheblich vereinfacht und wodurch Arbeitsschritte einspart werden.

Gemäß einer weiteren Ausführungsform wird das Formteil durch die Verbindung von zwei Halbelementen gebildet, wobei an jedes Halbelement des Formteils einseitig ein Rahmen angeformt wird, wobei das Formteil mit beidseitig ausgebildeten Rahmen durch die Verbindung der beiden Halbelemente gebildet wird. Dadurch wird die Rahmenanordnung auf jeder Seite bereits beim Herstellungsprozeß einstückig angeformt, was ein besonders einheitliches Erscheinungsbild bewirkt. Zur Ausbildung des vollständigen Formteils mit optisch transparenter Scheibe wird diese in den Öffnungsbereich eines Halbelements eingelegt und durch Anordnung des weiteren Halbelements wird das vollständige Formteil gebildet, welches dann auf beiden Seiten eine Rahmenanordnung aufweist. Die Position der Scheibe wird durch die überstehenden Bereiche fixiert. Die Verbindung der Halbelemente kann mittels Klebstoffen oder aber auch durch Befestigungsmittel wie Schrauben o.ä. erfolgen. Ferner bietet diese Ausführungsform die Möglichkeit, Dichtungs- und/oder Isoliermaterial zwischen den das endgültige Formteil bildenden Halbelementen anzuordnen. Dadurch können dem Formteil weitere vorteilhafte Eigenschaften verliehen werden. Diese Ausführung ist wiederum insbesondere vorteilhaft für die Herstellung von Formteilen wie beispielsweise Türen oder Fenster.

Gemäß einer vorteilhaften Ausführungsform wird das Formteil mit einstückig angeformten Rahmenbereichen und/oder die einzelnen Rahmenelemente durch Spritzguß- und/oder Spritzpreßverfahren hergestellt. Dies ermöglicht in vorteilhafter Weise die wirtschaftliche Herstellung der erfindungsgemäßen Formteile, da nur die Spritzwerkzeuge entsprechend gestaltet werden müssen. Dadurch sind in vorteilhafter Weise keine Zuschnittmaßnahmen o.ä. notwendig.

Gemäß einer besonders bevorzugten Ausführung werden das Formteil und/oder die Rahmenelemente bereits bei der Herstellung mit einer dekorativen und/oder funktionellen Oberfläche versehen, wobei das die Oberfläche bildende Material in die auszuspritzenden Hohlbereiche eines Spritzwerkzeugs eingebracht wird und eine härtbare Formmasse unter Druck in die Konturen des Spritzwerkzeugs gepreßt wird, wobei die Formmasse und das die Oberfläche des Kunststoffformteils bildende Material derart aufeinander abgestimmt werden, daß nach Aushärtung der Formmasse eine beständige Verbindung zwischen dem Formteil und dem die Oberfläche bildenden Material besteht. Vorzugsweise ist das die Oberfläche ausbildende Material eine Kunststofffolie. Dadurch daß das Formelement sowie die Rahmenelemente bereits bei der Herstellung mit einer funktionellen und/oder dekorativen Oberfläche versehen werden, entfallen die zeitund kostenintensiven Nachbehandlungen wie Grundieren, Lackieren, Versiegeln u.ä.. Dadurch daß die nachträglich aufzubringenden Rahmenelemente und das Formteil mit einstückig angeformten Rahmenbereichen mit demselben Oberflächenmaterial versehen werden können, ist gewährleistet, daß es zu keinen nachteiligen Farbunterschieden zwischen den aufzusetzenden Rahmenelementen und dem Formteil kommt. Eine ästhetisch ansprechende Erscheinung ist somit gewährleistet.

Gemäß einer vorteilhaften Weiterbildung wird zur Bildung des Formteils eine Formmasse verwendet, durch welche das Formteil eine Raumdichte in einem Bereich von 500 bis 700kg/m³ aufweist. Dies ist insbesondere bei der erfindungsgemäßen Herstellung von Türen vorteilhaft, da dadurch auf die im Stand der Technik bekannte Sandwichanordnung verzichtet werden kann. Im Stand der Technik werden Formteile wie Türen nachträglich beidseitig mit einer Platte bedeckt, welche dem Gesamtbauteil nicht nur die äußere Gestaltung verleiht, sondern ferner auch die nötige Festigkeit gibt. Selbstverständlich ist die Anordnung der Platten wiederum zeit-, material- und somit kostenintensiv. Durch die Verwendung der Formasse, die zu einer höheren Raumdichte des Formteils führt, ist die Festigkeit gewährleistet. Durch den Einsatz des die Oberfläche ausbildenden Materials wie beispielsweise einer Kunststofffolie wird dem Formteil ferner beim Spritzvorgang eine ansprechende Oberfläche verliehen, die je nach Wahl des Materials auch besondere Eigenschaften wie beispielsweise eine besondere Kratz- oder Schlagfestigkeit aufweisen kann. Insgesamt ist es dadurch möglich ein Gesamtbauteil wie eine Tür in einem Arbeitsgang herzustellen, was gegenüber dem Stand der Technik erhebliche Verbesserungen mit sich bringt.

Vorliegende Erfindung soll ferner anhand einiger Figuren näher erläutert werden. Dabei zeigen:
- Figur 1 a-c: schematisch die wichtigsten Schritte eines im Rahmen der Erfindung bevorzugt anwendbaren Spritzgußverfahrens
- Figur 2a: das im Stand der Technik verwendete Verfahren der Rahmenanordnung um den Öffnungsbereich eines Formteils
- Figur 2b: die Rahmenanordnung nach dem erfindungsgemäßen Verfahren
- Figur 3 und 4: weitere Ausführungsformen des erfindungsgemäßen Verfahrens

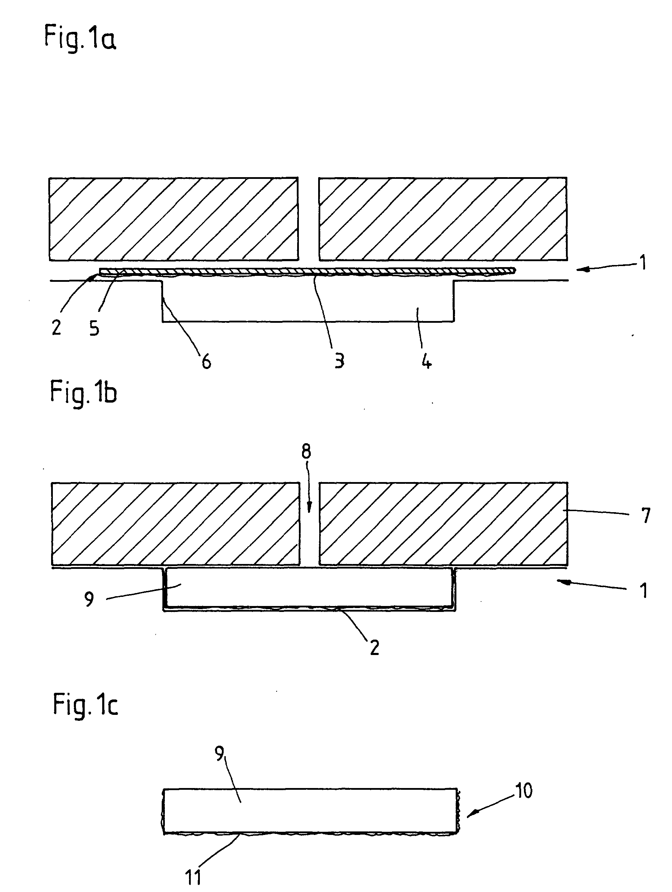

Figur 1 zeigt schematisch die bevorzugte Herstellung des Formteils, vorliegend durch Spritzguß. Vorliegend handelt es sich um die Herstellung einer Tür. Als das die Oberfläche bildende Material wird in diesem Ausführungsbeispiel eine Kunststofffolie verwendet. In Figur 1 a ist das Spritzgußwerkzeug 1, welches sich in geöffneter Stellung befindet, dargestellt. In das Werkzeug 1 ist eine Folie 2 eingelegt. Die Folie 2 weist eine strukturierte Oberfläche 3 auf, welche durch die gewellte Linie symbolisiert wird. Die. Folie 2 wird über den Hohlbereich 4 des Werkzeugs 1 plaziert. Das Werkzeug ist so gestaltet, daß direkt die auszusparenden Öffnungsbereiche in der Tür frei bleiben und ferner die anzuformenden Rahmenbereiche ausgebildet werden. Die Größe der Folie 2 ist so gewählt, daß die Länge der über den Hohlbereich überstehenden Enden 5 der Folienfläche an die Höhe der Seitenwände 6 des Hohlbereichs 4 angepasst sind.

Figur 1 b zeigt das Werkzeug 1, welches sich in geschlossenem Zustand befindet. Der Deckel 7 ist geschlossen und durch den Ausguß 8 wurde die aushärtbare Formmasse 9 in das Werkzeug eingespritzt. Durch die Formmasse 9 und den applizierten Druck wurde gemäß diesem Ausführungsbeispiel die Folie 2 in den Hohlbereich 4 gepreßt. Aufgrund der Abstimmung zwischen Formmasse und Kunststofffolie aufeinander, wird eine beständige Verbindung zwischen Formmasse und Kunststofffolie wenigstens nach der Aushärtung der Formmasse ausgebildet. Es ist dabei auch denkbar, daß die Kunststofffolie bereits vor Einbringung der Formmasse in die Konturen des Formteils gepreßt wird. So beispielsweise durch einen Stempel oder durch die Anlegung von Vakuum.

Figur 1 c zeigt das fertige, ausgehärtete Formteil 10 mit der ehemaligen Kunststofffolie als Oberfläche. Die Folie und die ausgehärtete Formmasse 9 weisen eine feste Verbindung zueinander auf und die in diesem Ausführungsbeispiel strukturierte Seite der Kunststofffolie bildet die Oberfläche 11 des fertigen Formteils. Durch das erfindungsgemäße Verfahren wird das Formteil, vorliegend die Tür, bereits im Fertigungsprozeß durch den Einsatz der Kunststofffolie mit einer funktionalen Oberfläche versehen, welche je nach Bedarf spezielle Eigenschaften und/oder dekorative Ausgestaltungen aufweist. Ferner weisen die einstückig um den Öffnungsbereich herum angeformten Rahmenbereiche direkt eine mit dem Formteil übereinstimmende Oberfläche auf, was ein deutlich ansprechenderes Erscheinungsbild bewirkt.

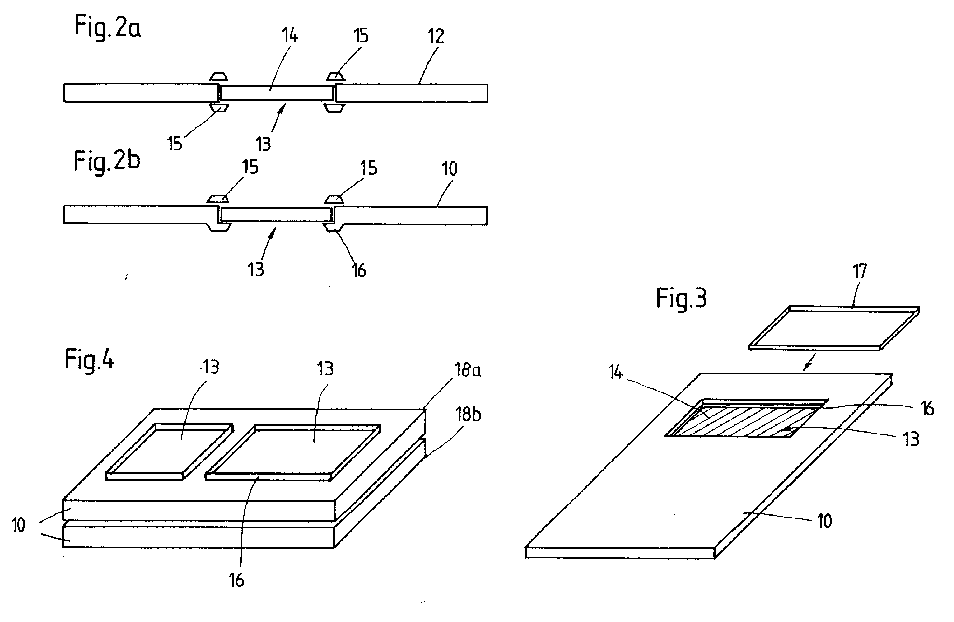

Figur 2a zeigt das im Stand der Technik bekannte Verfahren der beidseitigen Rahmenanordnung an einem Formteil, vorliegend einer Tür. Der Türkörper 12 weist einen Öffnungsbereich 13 auf, in welchen eine optisch transparente Scheibe 14 eingesetzt wurde. Um einen Zierrahmen auf beiden Seiten der Tür 12 und um den Öffnungsbereich 13 herum anzuordnen, müssen die einzelnen Rahmenelemente 15 einzeln aufgeklebt werden. Im Falle eines viereckigen Rahmens sind das 8 Elemente, deren Längenmaße bei der Rahmenproduktion zugeschnitten werden müssen, und wo die Gärungen angepaßt werden müssen. Die Teile müssen verklebt, lackiert, versiegelt und gegebenenfalls abgedichtet werden. Insgesamt ist eine große Anzahl von Arbeitsschritten erforderlich, um den Rahmen um den Öffnungsbereich herum anzuordnen, was auch sehr kostenintensiv ist. Auch muß die Scheibe beim Einsetzten in ihrer Position fixiert werden, um ein Herausfallen bei der Montage zu verhindern.

Figur 2b zeigt die Anordnung der Rahmen nach dem erfindungsgemäßen Verfahren. Das Formteil 10 weist gemäß dem Ausführungsbeispiel einseitig einstückig angeformte Rahmenbereiche 16 auf. Diese ragen über den Öffnungsbereich 13 hinaus. Sie bilden dadurch eine Art Stütze, gegen welche die Scheibe 14 beim Montagevorgang angelehnt werden kann. Dadurch wird ein Herausfallen der Scheibe in diese Richtung effektiv verhindert, und die Montage wird erleichtert. Die Rahmenanordnung auf der anderen Seite kann gemäß diesem Ausführungsbeispiel durch das Aufsetzten einzelner Rahmenelemente 15 gebildet werden, wodurch der Rahmen des Formteils vervollständigt wird. Die Rahmenelemente 15 können dabei einzelne Elemente sein, jedoch wird vorzugsweise die Rahmenanordnung als ganzes Rahmenelement, so beispielsweise wie in Figur 1 dargestellt, durch Spritzguß gebildet und aufgesetzt. Durch die erfindungsgemäße Herstellungsweise werden in vorteilhafter Weise Arbeitsschritte und Material eingespart, wobei zudem auch die Montage der Scheibe erheblich erleichtert wird. Selbstverständlich liegt es auch im Rahmen der Erfindung, daß der Rahmen nur einseitig ausgebildet wird, jedoch ist es vorteilhafter, wenn die Anordnung aus optischen Gründen beidseitig erfolgt.

Figur 3 erläutert im Detail eine bevorzugte Ausführungsform der Erfindung. Vorliegend ist das Formteil 10 wiederum eine Tür mit einem Öffnungsbereich 13. Wie in dieser Draufsicht erkennbar ist, stehen wiederum die einstückig angeformten Rahmenbereiche 16 über den Öffnungsbereich 13 über, und bilden so eine Auflagefläche für die im Öffnungsbereich 13 anzuordnende Scheibe 14. Gegebenenfalls kann auch eine Dichtung eingelegt werden, um die Scheibe adäquat abzudichten. Die Scheibe wird in ihrer Position fixiert. Dies kann durch Klebstoffe erfolgen, oder aber die Fixierung erfolgt durch das Aufsetzten der übrigen Rahmenbereiche, die vorliegend als ganzer Teilrahmen 17 um den Öffnungsbereich herum plaziert werden. Durch das Aufsetzten des Gesamtbauteils 17 wird der beidseitig des Formteils 10 angeordnete Rahmen komplettiert. Dadurch daß der Rahmen auf jeder Seite entweder als ganzes aufgesetzt wird oder direkt einstückig angeformt wurde, entstehen auch keine Übergänge oder Gärungslinien, die das einheitliche Gesamtbild stören könnten. Besonders vorteilhaft ist dabei, daß Formteil 10 mit einstückig angeformten Rahmenbereichen 16 und das aufzusetzende Rahmenelement 17 nach dem oben beschriebenen Spritzgußverfahren herzustellen, da so das Formteil direkt mit einer dekorativen oder funktionalen Oberfläche versehen wird, die einheitlich ist. Dadurch entfallen spätere Lackierungen u.ä.. Durch die Verwendung derselben Folie ist gewährleistet, daß der Rahmen und das Formteil aufeinander abgestimmt sind.

Figur 4 zeigt das erfindungsgemäße Verfahren gemäß einer weiteren vorteilhaften Ausführungsform. Dabei wird das Formteil 10 durch zwei Halbelemente 18a und 18b gebildet, welche zusammengefügt das eigentliche Formteil 10 bilden. Jedes Halbelement 18 weist zueinander korrespondierende Öffnungsbereiche 13 auf, sowie einstückig angeformte Rahmenbereiche 16. In die Öffnungsbereiche 13 des Halbelements 18b wird eine optisch transparente Scheibe hineingelegt, welche auf den überstehenden Randbereichen 16 der einstückig angeformten Rahmenanordnungen aufliegt. Zwei Halbelemente 18 werden zusammengesetzt und mittels Klebstoffen oder Befestigungsmitteln fest miteinander verbunden. Es besteht gemäß dieser Variante die Möglichkeit, Isolier- oder Dichtungsmaterial zwischen die Halbelemente 18a und 18b zu legen, und somit die Dämm- und Isolierungseigenschaften der Tür zu variieren.

### Bezugszeichenliste

- 1: Spritzgußwerkzeug
- 2: Folie
- 3: Folienoberfläche
- 4: Hohlbereich
- 5: überstehende Enden
- 6: Seitenwände des Hohlbereichs
- 7: Deckel
- 8: Ausguß
- 9: Formmasse
- 10: Formteil
- 11: Oberfläche des Formteils
- 12: Türkörper
- 13: Öffnungsbereich
- 14: Scheibe
- 15: Rahmenelemente
- 16: einstückig angeformte Rahmenbereiche
- 17: Teilrahmen
- 18a, b: Halbelemente

## Patentansprüche

1. Verfahren zur Herstellung eines Formteils mit einem Rahmen, wobei der Rahmen beidseitig des Formteils um einen Öffnungsbereich herum ausgebildet wird,
**dadurch gekennzeichnet,**
**daß** zumindest Teilbereiche des Rahmens bei der Herstellung des Formteils einstückig an das Formteil angeformt werden und die übrigen Rahmenbereiche nachträglich ergänzt werden.

2. Verfahren nach Anspruch 1, **dadurch gekennzeichnet, daß** die einstückig am Formteil angeformten Rahmenbereiche einseitig des Formteils ausgebildet werden.

3. Verfahren nach Anspruch 1 oder 2, **dadurch gekennzeichnet, daß** die einstückig am Formteil angeformten Teilbereiche des Rahmens über den Öffnungsbereich hinausragen.

4. Verfahren nach einem oder mehreren der Ansprüche 1 bis 3, **dadurch gekennzeichnet, daß** eine optisch transparente Scheibe in den Öffnungsbereich des Formteils eingesetzt wird, bevor die übrigen Rahmenbereiche ergänzt werden.

5. Verfahren nach einem oder mehreren der Ansprüche 1 bis 4, **dadurch gekennzeichnet, daß** eine Dichtung in den Öffnungsbereich eingesetzt wird.

6. Verfahren nach einem oder mehreren der Ansprüche 1 bis 5, **dadurch gekennzeichnet, daß** zumindest die angeformten Teilbereiche des Rahmens trapezförmig gstaltet sind.

7. Verfahren nach einem oder mehreren der Ansprüche 1 bis 6, **dadurch gekennzeichnet, daß** die zu ergänzenden Rahmenbereiche als Einzelelemente auf das Formteil aufgesetzt werden.

8. Verfahren nach einem oder mehreren der Ansprüche 1 bis 7, **dadurch gekennzeichnet, daß** das Formteil durch die Verbindung von zwei Halbelementen gebildet wird, wobei an jedes Halbelement des Formteils einseitig ein Rahmen angeformt wird, wobei das Formteil mit beidseitig ausgebildeten Rahmen durch die Verbindung der beiden Halbelemente gebildet wird.

9. Verfahren nach Anspruch 8, **dadurch gekennzeichnet, daß** Dichtungsund/oder Isoliermaterial zwischen die das Formteil bildenden Halbelemente angeordnet wird.

10. Verfahren nach einem oder mehreren der Ansprüche 1 bis 9, **dadurch gekennzeichnet, daß** das Formteil mit einstückig angeformten Rahmenbereichen und/oder die einzelnen Rahmenelemente durch Spritzgußoder Spritzpreßverfahren hergestellt werden.

11. Verfahren nach Anspruch 10, **dadurch gekennzeichnet, daß** das Formteil und/oder die Rahmenelemente bei der Herstellung mit einer dekorativen und/oder funktionellen Oberfläche versehen werden, wobei das die Oberfläche bildende Material in die auszuspritzenden Hohlbereiche eines Spritzwerkzeugs eingebracht wird und eine härtbare Formmasse unter Druck in die Konturen des Spritzwerkzeugs gepreßt wird, wobei die Formmasse und das die Oberfläche des Kunststoffformteils bildende Material derart aufeinander abgestimmt werden, daß nach Aushärtung der Formmasse eine beständige Verbindung zwischen dem Formteil und dem die Oberfläche bildenden Material besteht.

12. Verfahren nach Anspruch 11, **dadurch gekennzeichnet, daß** das die Oberfläche des Kunststoffformteils bildende Material eine Kunststofffolie ist.

13. Verfahren nach einem oder mehreren der Ansprüche 1 bis 12, **dadurch gekennzeichnet, daß** zur Bildung des Formteils eine Formmasse verwendet wird, durch welche das Formteil eine Raumdichte in einem Bereich von 500 bis 700 kg/m³ aufweist.
